# EUROPEAN PATENT APPLICATION

(11) **EP 4 586 068 A2**
(43) Date of publication of application: **16.07.2025**
(21) Application number: 25179841.9
(22) Date of filing: 27.05.2021
(51) Int. Cl.: G06F 3/04886

(54) **METHOD FOR CURSOR CONTROL, ELECTRONIC DEVICE AND STORAGE MEDIUM**

(30) Priority: 23.12.2020 CN 202011545904
(62) Divisional of application: 21176274.5
(71) Applicant: Beijing Xiaomi Mobile Software Co., Ltd., Beijing 100085 (CN)
(72) Inventor: GUO, Runhua, Beijing 100085 (CN); FAN, Lin, Beijing 100085 (CN); ZHANG, Sai, Beijing 100085 (CN)
(74) Representative: dompatent von Kreisler Selting Werner - Partnerschaft von Patent- und Rechtsanwälten mbB

(57) **Abstract**

Provided is a method for cursor control. A cursor control area is displayed in an interface in response to a display instruction of the cursor control area. The cursor control area includes a displacement area and a continuous movement area surrounding the displacement area. A control identifier is further provided in the cursor control area and is capable of moving in the cursor control area. The cursor is controlled to move in the interface in response to a movement operation on the control identifier. When the control identifier moves in the displacement area, a velocity at which the cursor moves in the interface is associated with a velocity at which the control identifier moves. When the control identifier moves from the displacement area to the continuous movement area, the cursor moves in the interface at a first velocity.

## Description

This is a divisional application of EP21176274.5, which was filed on May 27, 2021 and claimed priority to Chinese Patent Application No. 202011545904.4 filed on December 23, 2020.

### TECHNICAL FIELD

The disclosure relates to the technical field of electronic devices, and more particularly, to a method for cursor control, an electronic device and a storage medium.

### BACKGROUND

Movement of a cursor is needed during page browsing or content editing. For some electronic devices, a user may move the cursor with a finger to adjust the position of the cursor.

### SUMMARY

The disclosure provides a method and apparatus for cursor control, an electronic device and a storage medium, to solve the deficiencies in the related art.

The present invention is defined in the independent claims, and the preferable features according to the present invention are defined in the independent claims.

The technical solutions provided in the disclosure may have the following beneficial effects.

In the disclosure, the cursor control area is provided to implement the movement of the cursor. The velocity at which the cursor moves is associated with the position of the control identifier in the cursor control area and the velocity at which the control identifier moves, such that the velocity at which the cursor moves is controllable, and the cursor can move to a target position quickly.

It is to be understood that the above general description and the detailed description below are merely exemplary and explanatory and are not intended to limit the disclosure.

### BRIEF DESCRIPTION OF THE DRAWINGS

The accompanying drawings, which are incorporated in and constitute a part of the specification, illustrate the examples consistent with the disclosure and, together with the specification, serve to explain the principles of the disclosure.
FIG. 1 is a flow chart showing a method for cursor control according to an example of the disclosure.
FIG. 2 is a flow chart showing another method for cursor control according to an example of the disclosure.
FIG. 3A is a schematic diagram showing a text editing interface according to an example of the disclosure.
FIG. 3B is a schematic diagram showing a text editing interface displayed with a cursor control area according to an example of the disclosure.
FIG. 3C is a schematic diagram showing another text editing interface displayed with a cursor control area according to an example of the disclosure.
FIG. 3D is a schematic diagram showing still another text editing interface displayed with a cursor control area according to an example of the disclosure.
FIG. 3E is a schematic diagram showing a plain text interface according to an example of the disclosure.
FIG. 4 is a modular schematic diagram of a cursor control apparatus according to an example of the disclosure.
FIG. 5 is a block diagram of an apparatus for cursor control according to an example of the disclosure.

### DETAILED DESCRIPTION

In the following description related to the accompanying drawings, the same numbers in different drawings represent the same or similar elements unless otherwise represented. The implementations described in the following examples do not represent all the implementations consistent with the disclosure. Instead, they are merely examples of the apparatuses and methods consistent with some aspects of the disclosure and the appended claims.

Movement of a cursor is needed during page browsing or content editing. For some electronic devices, a user may move the cursor with a finger to adjust the position of the cursor. When moving the cursor in such a manner, the finger may occlude the position of the cursor, which is inconvenient for adjusting the cursor to a target position, and the error rate is high. Hence, the existing manner of cursor moving has a relatively low efficiency.

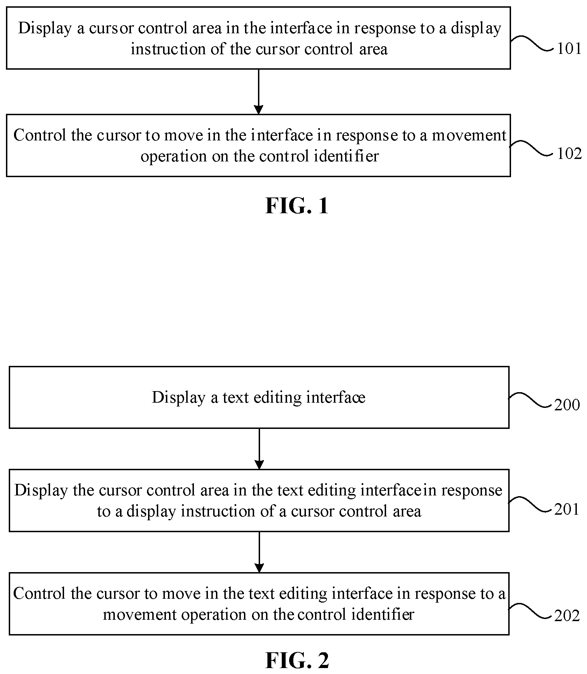

FIG. 1 is a flow chart showing a method for cursor control according to an example of the disclosure. The method may be applied to an electronic device having a touch screen. The electronic device may include but is not limited to mobile phones, tablets, notebooks, personal digital assistants (PDAs), wearable devices (such as smart glasses and smartwatches), etc. The electronic device may be installed with various applications such as a browser, e-book and instant messaging. When a user browses the application interfaces and edits a text in the interface, there is a need to move the cursor displayed in the interface and locate the cursor to a target position. The specific implementation for controlling a movement of the cursor are described below.

Referring to FIG. 1, the method may include Step 101 and Step 102.

In Step 101, a cursor control area is displayed in an interface in response to a display instruction of the cursor control area.

The interface may be an interface including a plain text, an interface including a text and a picture, or further an interface including a text editing area.

The display instruction of the cursor control area may be triggered when the user performs a target operation in the interface. In order to facilitate the user operation, the cursor control area may be displayed at a position convenient for the user operation. For example, when the electronic device is held by the user, the cursor control area may be displayed at an edge of the interface close to a wrist of the user, and the finger of the user may perform an operation such as clicking, pressing, or sliding easily at the edge of the interface. The edge area of the interface is referred to as a finger operation hot area.

A control identifier is further provided in the cursor control area. The control identifier may move in the cursor control area. An association relationship between the control identifier and the cursor displayed in the interface is established in advance, such that a movement of the cursor may be controlled through a movement of the control identifier.

The cursor control area includes a displacement area and a continuous movement area surrounding the displacement area. When the control identifier moves in the displacement area, a velocity at which the cursor moves in the interface is associated with a velocity at which the control identifier moves; and when the control identifier moves from the displacement area to the continuous movement area, the cursor moves in the interface at a first velocity. The first velocity may be a preset fixed value. The first velocity may be alternatively determined according to a velocity at which the user moves the control identifier. For example, the first velocity is slightly greater than a maximum velocity at which the control identifier moves in the displacement area. A difference between the first velocity and the maximum velocity may be set to a fixed value according to an actual need.

In Step 102, the cursor is controlled to move in the interface in response to a movement operation on the control identifier.

The movement operation may be, for example, a sliding operation(s). The velocity at which the control identifier moves in the displacement area is associated with the sliding operation(s). When detecting that the user performs the sliding operation(s) in the displacement area, the electronic device controls the control identifier to move along a direction consistent with the sliding operation(s); and the faster the user slides on the touch screen, the faster the control identifier moves. When the control identifier moves in the displacement area, the velocity at which the cursor moves in the interface is associated with the velocity at which the control identifier moves, and the faster the control identifier moves, the faster the cursor moves in the interface correspondingly. The correspondence relationship between the length for which the user slides on the touch screen and the distance for which the control identifier moves, and the correspondence relationship between the distance for which the control identifier moves and the distance for which the cursor moves may be set autonomously according to an actual need. For example, whenever the user slides for a length of two pixels on the touch screen, the control identifier moves for a distance of two pixels and the cursor moves for a distance of one character.

The movement operation may be, for example, a clicking operation(s). The velocity at which the control identifier moves in the displacement area is associated with the clicking operation. When detecting that the user performs the clicking operation(s) in the displacement area, the electronic device controls the control identifier to move towards the region in which the clicking operation(s) is/are performed; and the faster the clicking operation(s) is performed, the faster the control identifier moves. When the control identifier moves in the displacement area, the velocity at which the cursor moves in the interface is associated with the velocity at which the control identifier moves, and the faster the control identifier moves, the faster the cursor moves in the interface correspondingly. The correspondence relationship between each clicking operation and the distance for which the control identifier moves, and the correspondence relationship between the distance for which the control identifier moves and the distance for which the cursor moves may be set autonomously according to an actual need. For example, whenever the user performs one clicking operation, the control identifier moves for a distance of two pixels and the cursor moves for a distance of one character.

The movement operation may be, for example, the pressing operation(s). The velocity at which the control identifier moves in the displacement area is associated with the pressing operation(s). When detecting that the user performs the pressing operation(s) in the displacement area, the electronic device controls the control identifier to move towards the region in which the pressing operation(s) is/are performed. The pressure of the pressing operation may be set to be positively correlated with the velocity at which the control identifier moves, and the larger the pressure of the pressing operation detected by the electronic device, the faster the control identifier moves. When the control identifier moves in the displacement area, the velocity at which the cursor moves in the interface is associated with the velocity at which the control identifier moves, and the faster the control identifier moves, the faster the cursor moves in the interface correspondingly.

When the control identifier moves from the displacement area of the cursor control area to the continuous movement area by means of the movement operation, since the continuous movement area is the surrounding area of the cursor control area and the control identifier is unable to move further to the periphery, the cursor is controlled to continuously move in the interface at the first velocity so as to meet the requirement of the user for the continuous movement of the cursor. In this case, the cursor enters a continuously moving state until a stop-moving instruction is received to control the cursor to stop moving. The stop-moving instruction may be, for example, triggered by moving the control identifier out of the continuous movement area.

When the stop-moving instruction is not received after the cursor moves for a first preset distance in the interface at the first velocity, it is indicated that the cursor is still far away from the target position of the user at present, and then the cursor is controlled to move faster, i.e., move in the interface at a second velocity. Herein, the second velocity is greater than the first velocity.

In the example of the disclosure, the cursor control area is provided to implement the movement of the cursor. The velocity at which the cursor moves is associated with the position of the control identifier in the cursor control area and the velocity at which the control identifier moves, such that the velocity at which the cursor moves is controllable, and the localization of the cursor may be achieved quickly.

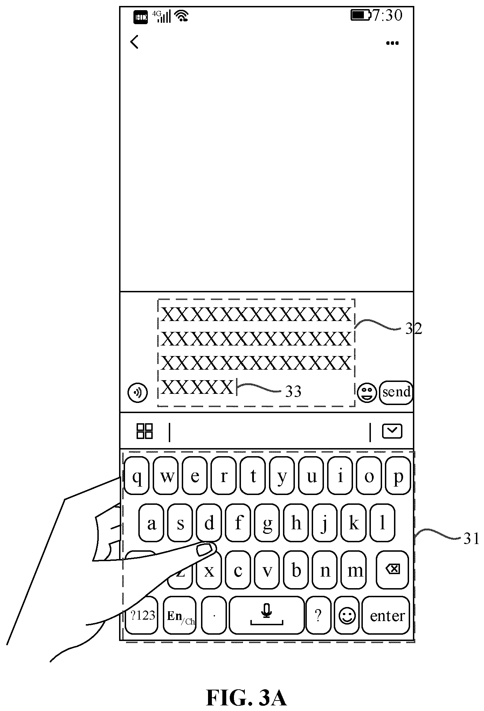

In a scenario of the movement of the cursor in the text editing area, the specific implementation for controlling the cursor to move is further described below in combination with FIG. 2, and FIG. 3A to FIG. 3D. Referring to FIG. 2, the method includes Step 200 to Step 202.

In Step 200, a text editing interface is displayed.

Referring to FIG. 3A, the text editing interface may include a virtual keyboard 31, a text editing area 32 and a cursor 33 located at an end of the text content in the text editing area 32. The user may edit the text in the text editing area 32 with the virtual keyboard 31.

In Step 201, the cursor control area 34 is displayed in the text editing interface in response to a display instruction of a cursor control area 34.

The display instruction of the cursor control area 34 may be triggered by a user performing a target operation in the interface.

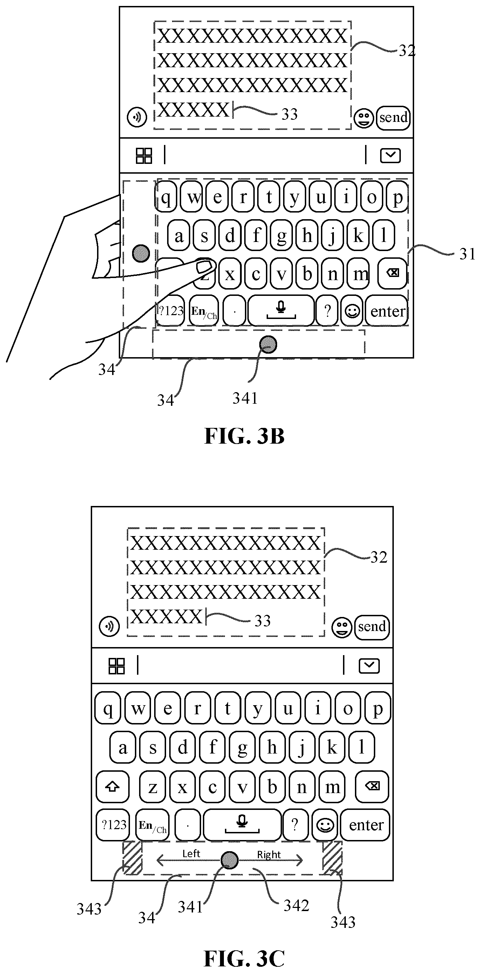

For example, the target operation may be a pressing operation acting for a preset duration in the target area of the interface. The target area where the virtual keyboard 31 is located is taken as an example. Referring to FIG. 3A, when the user performs the pressing operation in the area where the virtual keyboard is located, the electronic device may detect the pressing operation of the user performed on the virtual keyboard 31; and when the electronic device determines that the pressing operation has acted on the virtual keyboard 31 for more than a preset duration, referring to FIG. 3B, the cursor control area 34 is displayed in the interface.

The target operation may be, for example, a pressing operation at a preset pressure performed in the target area of the interface. The interface including the text editing area 32 and the target area of the interface where the virtual keyboard 31 is located are taken as an example. When the user performs the pressing operation in the area where the virtual keyboard 31 is located, the electronic device may detect the pressing operation of the user acting on the virtual keyboard 31; and when the electronic device determines that the pressure of the pressing operation acting on the virtual keyboard 31 reaches the preset pressure, referring to FIG. 3B, the cursor control area 34 is displayed in the interface.

In order to facilitate the user operation, the cursor control area 34 is displayed at a position convenient for the user operation. When the electronic device is held by the user, the cursor control area 34 may be displayed at an edge of the interface close to a wrist of the user in the interface, and the finger of the user may perform the operation such as clicking, pressing, and sliding easily at the edge of the interface. The edge area of the interface is referred to as a finger operation hot area.

For example, when the user holds the electronic device with a single left hand, the edge of the interface close to the wrist of the user is the left edge and the bottom edge of the interface. Referring to FIG. 3B, the cursor control area 34 is displayed at the left edge and the bottom edge of the interface, and the user may select autonomously one cursor control area 34 to achieve the movement of the cursor 33. It is to be understood that when the user holds the electronic device with a right hand, the cursor control area 34 may be displayed at the right edge and the bottom edge of the interface.

It is to be noted that the number of cursor control areas 34 is not limited to two shown in the figure, and only one cursor control area 34 may be displayed in the interface. For example, when the user holds the electronic device with the single left hand, the cursor control area 34 is displayed at the left edge or the bottom edge of the interface; and when the user holds the electronic device with the single right hand, the cursor control area 34 is displayed at the right edge or the bottom edge of the interface. Three cursor control areas 34 may be alternatively displayed in the interface. For example, when the user holds the electronic device with both hands, the three cursor control areas 34 may be respectively displayed at the left edge, the bottom edge and the right edge of the interface, and the user may select autonomously one cursor control area 34 to achieve the movement of the cursor 33.

Regarding how to determine the edge of the interface close to the wrist of the user, an infrared sensor, an ultrasonic sensor, or the like may be provided at four edges of the electronic device to determine the edge of the interface close to the wrist of the user, which is not restricted and the detailed implementation thereof is not specifically limited in the disclosure.

The control identifier 341 is further provided in the cursor control area 34. The control identifier 341 may move in the cursor control area 34. The association relationship between the control identifier 341 and the cursor 33 displayed in the interface is established in advance, such that a movement of the cursor 33 may be controlled by a movement of the control identifier 341.

In Step 202, the cursor 33 is controlled to move in the text editing interface in response to a movement operation on the control identifier 341.

Referring to FIG. 3C, in a scenario where the cursor control area 34 is displayed at the bottom of the interface, the specific implementation for the movement of the cursor 33 is further described. In FIG. 3C, the cursor control area 34 is divided into the displacement area 342 and the continuous movement area 343 surrounding the displacement area 342. When the cursor control area 34 is just displayed, the control identifier 341 is located at a central position of the displacement area 342. In response to the movement operation performed on the control identifier 341 by the user, the control identifier 341 may move in the displacement area 342 and in the continuous movement area 343. When the control identifier 341 moves in the displacement area 342, a velocity at which the cursor 33 moves in the interface is associated with a velocity at which the control identifier 341 moves; and when the control identifier 341 moves from the displacement area 342 to the continuous movement area 343, the cursor 33 moves in the interface at a first velocity.

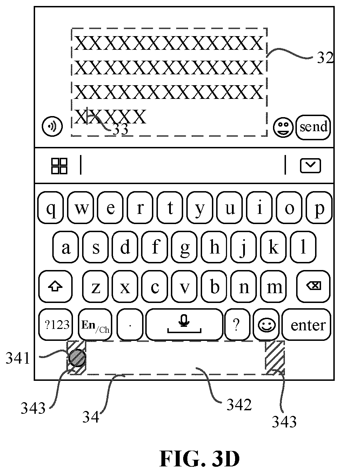

Referring to FIG. 3C, the cursor 33 is located at the end of the text in the text editing area 32 before controlled to move. The user may trigger the movement operation on the control identifier 341 by means of pressing, clicking and sliding, which is not limited hereto. The sliding operation is taken as an example. When the user performs the sliding operation in the cursor control area 34, the control identifier 341 moves accordingly, and the velocity at which the control identifier 341 moves is positively correlated with the velocity of the sliding operation; and correspondingly, the cursor 33 moves in the text editing area 32, and the velocity at which the cursor 33 moves is positively correlated with the velocity at which the control identifier 341 moves. For example, when the user performs a leftward sliding operation in the cursor control area 34, the control identifier 341 moves leftward, and the cursor 33 moves leftward accordingly word by word in the present interface. When the user stops the sliding operation and the control identifier 341 is still located in the displacement area 342, the cursor 33 also stops moving accordingly. When the user continues to perform the leftward sliding operation, referring to FIG. 3D, to allow the control identifier 341 to move from the displacement area 342 to the continuous movement area 343, the cursor 33 continuously moves at the first velocity. In this case, the cursor 33 enters the continuously moving state, moves to the beginning of the row and autonomously moves to the end of the previous row. Before the stop-moving instruction of the user is received, the cursor 33 continuously moves leftward word by word at the first velocity. The cursor 33 does not stop moving until the stop-moving instruction is received. When the stop-moving instruction is still not received after the cursor 33 moves for a first preset distance at the first velocity, the cursor 33 is controlled to continuously move leftward word by word at a second velocity greater than the first velocity, until the stop-moving instruction is received or the cursor 33 moves to the beginning of the editing area.

In different cases, the cursor may be controlled to be localized to the target position quickly by controlling the cursor to move continuously at the first velocity and the second velocity respectively. Especially when the screen is relatively large and the cursor needs to move within a large range, the user may move the cursor to the target position with relatively less operations.

The first preset distance may be set autonomously according to an actual need, such as a distance of 10 characters. When the stop-moving instruction is not received after the cursor 33 moves for the distance of 10 characters at the first velocity, the cursor moves continuously at the second velocity.

The stop-moving instruction may be, for example, triggered by moving the control identifier 341 out of the continuous movement area 343 to the displacement area 342, i.e., when the control identifier 341 moves out of the continuous movement area 343 to the displacement area 342, the control identifier 341 exits from the continuously moving state.

In order to avoid identifying falsely, as the stop-moving instruction of the cursor 33, the movement of the control identifier 341 from the continuous movement area 343 back to the displacement area 342 due to muscle twitches, a continuous movement buffer area may be provided between the displacement area 342 and the continuous movement area 343. When the control identifier 341 moves back to the displacement area 342 from the continuous movement area 343 through the continuous movement buffer region, i.e., only when the control identifier 341 is far away from the displacement area 342, the cursor 33 exits from the continuously moving state.

In any of the above-mentioned examples, the cursor 33 may further move in combination with a vibration prompt. Whenever the cursor 33 moves for a second preset distance, a first vibration prompt is triggered, so as to inform the user that the cursor 33 completes one movement. The second preset distance may be, for example, a distance of one character displayed in the interface. The cursor 33 vibrates once whenever moving for a distance of one character.

A second vibration prompt is triggered when the control identifier 341 moves from the displacement area 342 to the continuous movement area 343, and a vibration strength of the second vibration prompt is greater than a vibration strength of the first vibration prompt. That is, when the control identifier 341 enters the continuous movement area 343, one strong vibration is given to inform the user that the cursor 33 enters the continuously moving state. In order to avoid the discomfort brought to the user due to the strong vibration, the vibration prompt is stopped after the cursor 33 enters the continuously moving state. By giving different vibration feedbacks when the cursor 33 moves and enters the continuously moving state, the user experience is better.

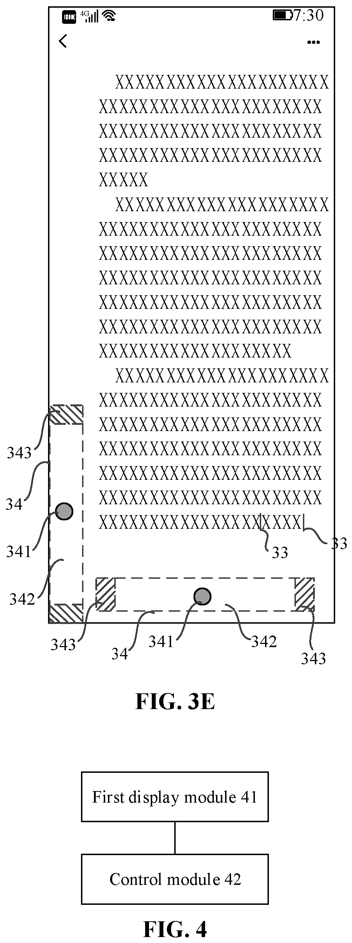

The methods for cursor control provided in any of the above-mentioned examples are further applied to a scenario of selecting a text content in the text interface. Referring to Fig. 3E, when selecting the text content, two cursors are displayed in the interface, and the content between the two cursors represents the presently selected text content. In the example of the disclosure, two cursor control areas are displayed. The two cursor control areas correspond respectively to one cursor, and are arranged to control the movement and localization of the cursor. The control on each cursor is similar to the control on the movement of the cursor in the text editing area, and referring to Step 201 and Step 202, the details are not elaborated herein.

Corresponding to the above-mentioned examples for the method for cursor control, the disclosure also provides an example for a cursor control apparatus.

FIG. 4 is a modular schematic diagram illustrating a cursor control apparatus according to an example of the disclosure. The cursor control apparatus is applied to an electronic device. The electronic device includes a touch screen, and an interface displayed on the touch screen includes a cursor.

The apparatus may include a first display module 41 and a control module 42.

The first display module 41 is configured to display the cursor control area in the interface in response to a display instruction of a cursor control area. The cursor control area includes a displacement area and a continuous movement area surrounding the displacement area, and a control identifier is further provided in the cursor control area and is capable of moving in the cursor control area.

The control module 42 is configured to control the cursor to move in the interface in response to a movement operation on the control identifier. When the control identifier moves in the displacement area, a velocity at which the cursor moves in the interface is associated with a velocity at which the control identifier moves; and when the control identifier moves from the displacement area to the continuous movement area, the cursor moves in the interface at a first velocity.

Optionally, the apparatus may further include a second display module and a detection module.

The second display module displays a virtual keyboard in the interface.

The detection module is configured to call the first display module to display the cursor control area when detecting that a touch operation has acted on the virtual keyboard for more than a preset duration; or, call the first display module to display the cursor control area when detecting that a pressure of the touch operation acting on the virtual keyboard exceeds a pressure threshold.

Optionally, when the cursor control area is displayed in the interface, the first display module 41 is configured to:
display the cursor control area at an edge of the interface close to a wrist of the user when the electronic device is held by a user.

Optionally, the control module 42 is further configured to:
control the cursor to move in the interface at a second velocity when a stop-moving instruction is not received after the cursor moves for a first preset distance in the interface at the first velocity. Herein, the second velocity is greater than the first velocity.

Optionally, when the control identifier moves from the continuous movement area back to the displacement area, the control module 42 is further configured to control the cursor to stop moving.

Optionally, a continuous movement buffer region is further provided between the displacement area and the continuous movement area.

When the control identifier moves from the continuous movement area back to the displacement area through the continuous movement buffer region, the control module 42 is further configured to control the cursor to stop moving.

Optionally, the apparatus may further include a trigger module.

The trigger module is configured to trigger a first vibration prompt whenever the cursor moves for a second preset distance.

Optionally, the trigger module is further configured to trigger a second vibration prompt when the control identifier moves from the displacement area to the continuous movement area. A vibration strength of the second vibration prompt is greater than a vibration strength of the first vibration prompt.

Regarding the apparatus in the above-mentioned example, the specific manners in which the modules perform the operations are described in detail in the related method examples, and are not elaborated herein.

Since the device examples basically correspond to the method examples, references may be made to the description in the method examples with respect to the relevant parts. The above described apparatus examples are merely exemplary. The modules described as separate parts may or may not be physically separate, and the parts displayed as modules may or may not be physical units, i.e., may be located at one position, or may be distributed on multiple network modules. Some or all of the modules may be selected according to actual needs to achieve the objectives of the solutions in the examples. Those of ordinary skill in the art may understand and implement the examples without creative work.

The example of the disclosure further provides an electronic device. The electronic device includes:
a processor; and
a memory, configured to store instructions executable by the processor.

The processor is configured to implement the method for cursor control in any one of the above-mentioned examples.

The example of the disclosure further provides a computer-readable storage medium storing thereon a computer program which, when performed by a processor, implements the steps of the method for cursor control of any one of the above-mentioned examples.

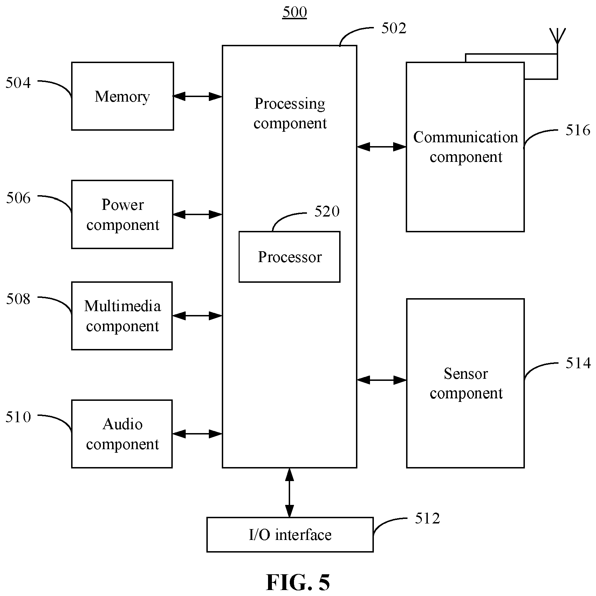

FIG. 5 is a block diagram of an apparatus for cursor control according to an example of the disclosure. The apparatus may be a mobile phone, a computer, a digital broadcasting terminal, a messaging device, a game console, a tablet, a medical device, an exercise equipment, a PDA, or the like.

As shown in FIG. 5, the apparatus 500 may include one or more of the following components: a processing component 502, a memory 504, a power component 506, a multimedia component 508, an audio component 510, an Input/Output (I/O) interface 512, a sensor component 514, and a communication component 516. The apparatus may further include an antenna module (for example, an antenna module which may be connected to the communication component 516).

The processing component 502 typically controls the overall operations of the apparatus 500, such as the operations associated with display, telephone calls, data communications, camera operations, or recording operations. The processing component 502 may include one or more processors 520 to perform instructions to implement all or part of the steps in the above-described methods. Moreover, the processing component 502 may include one or more modules to facilitate the interaction between the processing component 502 and other components. For instance, the processing component 502 may include a multimedia module to facilitate the interaction between the multimedia component 508 and the processing component 502.

The memory 504 is configured to store various types of data to support the operations in the apparatus 500. Examples of such data include instructions for any applications or methods operated on the apparatus 500, contact data, phonebook data, messages, pictures, videos, etc. The memory 504 may be implemented by using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power for the apparatus 500.

The multimedia component 508 includes a screen providing an output interface between the apparatus 500 and the user. In some examples, the screen may include a Liquid Crystal Display (LCD) and a Touch Panel (TP). When the screen includes the TP, the screen may be implemented as a touch screen to receive an input signal from the user. The TP includes one or more touch sensors to sense touches, slides and gestures on the TP. The touch sensors may not only sense a boundary of a touch or a slide, but also sense a duration and a pressure associated with the touch or the slide. In some examples, the multimedia component 508 includes a front camera and/or a rear camera. The front camera and/or the rear camera may receive external multimedia data when the apparatus 500 is in an operation mode, such as a shooting mode or a video mode. Each of the front camera and the rear camera may be a fixed optical lens system or have a focus and an optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some examples, the audio component 510 further includes a speaker configured to output audio signals.

The I/O interface 512 provides an interface between the processing component 502 and peripheral interface modules. The peripheral interface modules may be a keyboard, a click wheel, a button, or the like. The button may include, but is not limited to, a home button, a volume button, a start button, and a lock button.

The sensor component 514 includes one or more sensors to provide state assessments in various aspects for the apparatus 500. For instance, the sensor component 514 may detect an on/off state of the apparatus 500, and relative positioning of the components such as a display and small keyboard of the apparatus 500. The sensor component 514 may further detect a change in a position of the apparatus 500 or a change in a position of a component of the apparatus 500, the presence or absence of contact between the user and the apparatus 500, the orientation or acceleration/deceleration of the apparatus 500, or a change in a temperature of the apparatus 500. The sensor component 514 may include a proximity sensor configured to detect the presence of nearby objects without any physical contacts. The sensor component 514 may further include a light sensor such as a complementary metal oxide semiconductor (CMOS) or a charge coupled device (CCD) image sensor, configured for usage in an imaging application. In some examples, the sensor component 514 may further include an acceleration sensor, a gyroscope sensor, a magnetic sensor, a pressure sensor, or a temperature sensor.

The communication component 516 is configured to facilitate the wired or wireless communication between the apparatus 500 and other devices. The apparatus 500 may access a communication-standard-based wireless network such as wireless fidelity (WiFi), 2G, 3G, 4G, 5G or a combination thereof. In an exemplary example, the communication component 516 receives a broadcast signal or information associated with broadcast from an external broadcast management system via a broadcast channel. In one exemplary example, the communication component 516 further includes a near field communication (NFC) module to facilitate short-range communications. For example, the NFC module may be implemented based on a radio frequency identification (RFID) technology, an infrared data association (IrDA) technology, an ultra wideband (UWB) technology, a bluetooth (BT) technology, or other technologies.

In an example, the apparatus 500 may be implemented with one or more application specific integrated circuit (ASIC), digital signal processor (DSP), digital signal processing device (DSPD), programmable logic device (PLD), field programmable gate array (FPGA), controller, microcontroller, microprocessor, or other electronic components, for executing the methods in any one of the above-mentioned examples.

In an example, a non-transitory computer readable storage medium including instructions is further provided, such as the memory 504 including the instructions, and the instructions may be executed by the processing component 520 of the apparatus 500 to implement the above-mentioned methods. For example, the non-transitory computer-readable storage medium may be a read only memory (ROM), a random access memory (RAM), a compact disc read-only memory (CD-ROM), a magnetic tape, a floppy disc, an optical data storage device or the like.

Other examples of the disclosure will be apparent to those skilled in the art after the specification is considered and the disclosure here is put into practice. The disclosure is intended to cover any variations, usages, or adaptations of the disclosure following the general principles thereof and including the common knowledge in the art or common technical measures in the art undisclosed here. It is intended that the specification and examples be considered exemplary merely, and a true scope of the disclosure is indicated by the following claims.

It is to be understood that the disclosure is not limited to the exact structures described above and illustrated in the accompanying drawings, and various modifications and changes may be made without departing from the scope thereof. It is intended that the scope of the disclosure only be limited by the appended claims.

In the following further aspects of the invention are outlined:
1. A method for cursor control, applied to an electronic device comprising a touch screen, an interface displayed on the touch screen comprising a cursor; and
   the method comprising:
   displaying (101) a cursor control area in the interface in response to a display instruction of the cursor control area, wherein the cursor control area comprises a displacement area and a continuous movement area surrounding the displacement area, and a control identifier is further provided in the cursor control area and is capable of moving in the cursor control area; and
   controlling (102) the cursor to move in the interface in response to a movement operation on the control identifier; wherein when the control identifier moves in the displacement area, a velocity at which the cursor moves in the interface is associated with a velocity at which the control identifier moves; and when the control identifier moves from the displacement area to the continuous movement area, the cursor moves in the interface at a first velocity.
2. The method for cursor control according to aspect 1, further comprising:
   displaying a virtual keyboard in the interface; and
   displaying the cursor control area when detecting that a touch operation has acted on the virtual keyboard for more than a preset duration; or, displaying the cursor control area when detecting that a pressure of the touch operation acting on the virtual keyboard exceeds a pressure threshold.
3. The method for cursor control according to aspect 1 or 2, wherein displaying the cursor control area in the interface comprises:
   displaying the cursor control area at an edge of the interface close to a wrist of a user when the electronic device is held by the user.
4. The method for cursor control according to any of aspects 1 to 3, further comprising:
   controlling the cursor to move in the interface at a second velocity in response to not receiving a stop-moving instruction when the cursor has moved for a first preset distance in the interface at the first velocity, wherein the second velocity is greater than the first velocity.
5. The method for cursor control according to any of aspects 1 to 4, further comprising:
   controlling the cursor to stop moving when the control identifier moves from the continuous movement area back to the displacement area.
6. The method for cursor control according to any of aspects 1 to 5, wherein a continuous movement buffer region is further provided between the displacement area and the continuous movement area; and
   wherein the method further comprises:
   controlling the cursor to stop moving when the control identifier moves from the continuous movement area back to the displacement area through the continuous movement buffer region.
7. The method for cursor control according to any of aspects 1 to 6, further comprising:
   triggering a first vibration prompt whenever the cursor moves for a second preset distance.
8. The method for cursor control according to aspect 7, further comprising:
   triggering a second vibration prompt when the control identifier moves from the displacement area to the continuous movement area, wherein a vibration strength of the second vibration prompt is greater than a vibration strength of the first vibration prompt.
9. An apparatus for cursor control, applied to an electronic device, the electronic device comprising a touch screen, an interface displayed on the touch screen comprising a cursor; and
   the apparatus comprising:
   a display module (41), configured to display a cursor control area in the interface in response to a display instruction of the cursor control area, wherein the cursor control area comprises a displacement area and a continuous movement area surrounding the displacement area, and a control identifier is further provided in the cursor control area and is capable of moving in the cursor control area; and
   a control module (42), configured to control the cursor to move in the interface in response to a movement operation on the control identifier; wherein when the control identifier moves in the displacement area, a velocity at which the cursor moves in the interface is associated with a velocity at which the control identifier moves; and when the control identifier moves from the displacement area to the continuous movement area, the cursor moves in the interface at a first velocity.
10. The apparatus for cursor control according to aspect 9, wherein the display module (41) is further configured to:
   display a virtual keyboard in the interface; and
   display the cursor control area when detecting that a touch operation has acted on the virtual keyboard for more than a preset duration; or, displaying the cursor control area when detecting that a pressure of the touch operation acting on the virtual keyboard exceeds a pressure threshold.
11. The apparatus for cursor control according to aspects 9 or 10, wherein in displaying the cursor control area in the interface, the display module (41) is configured to display the cursor control area at an edge of the interface close to a wrist of a user when the electronic device is held by the user.
12. The apparatus for cursor control according to any of aspects 9 to 11, wherein the control module (42) is further configured to control the cursor to move in the interface at a second velocity in response to not receiving a stop-moving instruction when the cursor has moved for a first preset distance in the interface at the first velocity, wherein the second velocity is greater than the first velocity.
13. The apparatus for cursor control according to any of aspects 9 to 12, wherein the control module (42) is further configured to control the cursor to stop moving when the control identifier moves from the continuous movement area back to the displacement area.
14. An electronic device (500), comprising:
   a processor (520); and
   a memory (504), configured to store instructions executable by the processor (520),
   wherein the processor (520) is configured to perform the instructions to implement the method for cursor control of any one of the aforementioned aspects 1 to 8.
15. A computer-readable storage medium storing thereon a computer program which, when performed by a processor, implements the steps of the method for cursor control of any one of the aforementioned aspects 1 to 8.

## Claims

1. A method for cursor control, applied to an electronic device comprising a touch screen, and the method comprising:
displaying (200) a text editing interface on the touch screen;
displaying (201) a cursor control area in the text editing interface in response to a display instruction of the cursor control area, wherein the cursor control area is located at a bottom of the text editing interface;
controlling (202) a cursor to move in the text editing interface in response to a movement operation on a control identifier in the cursor control area.

2. The method for cursor control according to claim 1, wherein
the cursor control area comprises a displacement area and a continuous movement area surrounding the displacement area; and
when the control identifier moves in the displacement area, a velocity at which the cursor moves in the text editing interface is associated with a velocity at which the control identifier moves; and when the control identifier moves from the displacement area to the continuous movement area, the cursor moves in the text editing interface at a first velocity.

3. The method for cursor control according to claim 1 or 2, further comprising:
displaying a virtual keyboard in the text editing interface; and
wherein displaying (201) the cursor control area in the text editing interface in response to the display instruction of the cursor control area, comprises:
displaying the cursor control area in the text editing interface when determining that a pressing operation has acted on the virtual keyboard for more than a preset duration; or, displaying the cursor control area in the text editing interface when determining that a pressure of the pressing operation acting on the virtual keyboard exceeds a pressure threshold.

4. The method for cursor control according to any of claims 1 to 3, wherein the cursor control area is further located at an edge of the text editing interface close to a wrist of a user when the electronic device is held by the user.

5. The method for cursor control according to any of claims 1 to 4, further comprising:
controlling the cursor to move in the text editing interface at a second velocity in response to not receiving a stop-moving instruction when the cursor has moved for a first preset distance in the text editing interface at a first velocity, wherein the second velocity is greater than the first velocity.

6. The method for cursor control according to any of claims 2 to 5, further comprising:
controlling the cursor to stop moving when the control identifier moves from the continuous movement area back to the displacement area.

7. The method for cursor control according to any of claims 2 to 6, wherein a continuous movement buffer area is provided between the displacement area and the continuous movement area; and
wherein the method further comprises:
controlling the cursor to stop moving when the control identifier moves from the continuous movement area back to the displacement area through the continuous movement buffer region.

8. The method for cursor control according to any of claims 2 to 7, further comprising:
triggering a first vibration prompt whenever the cursor moves for a second preset distance.

9. The method for cursor control according to claim 8, further comprising:
triggering a second vibration prompt when the control identifier moves from the displacement area to the continuous movement area, wherein a vibration strength of the second vibration prompt is greater than a vibration strength of the first vibration prompt.

10. An apparatus for cursor control, applied to an electronic device comprising a touch screen, and the apparatus comprising:
a display module (41), configured to display a text editing interface on the touch screen; and display a cursor control area in the text editing interface in response to a display instruction of the cursor control area, wherein the cursor control area is located at a bottom of the text editing interface; and
a control module (42), configured to control a cursor to move in the text editing interface in response to a movement operation on a control identifier in the cursor control area.

11. The apparatus for cursor control according to claim 10, wherein
the cursor control area comprises a displacement area and a continuous movement area surrounding the displacement area; and
when the control identifier moves in the displacement area, a velocity at which the cursor moves in the text editing interface is associated with a velocity at which the control identifier moves; and when the control identifier moves from the displacement area to the continuous movement area, the cursor moves in the text editing interface at a first velocity.

12. The apparatus for cursor control according to claim 10 or 11, wherein the display module (41) is configured to:
display a virtual keyboard in the text editing interface; and
display the cursor control area in the text editing interface when determining that a pressing operation has acted on the virtual keyboard for more than a preset duration; or, display the cursor control area in the text editing interface when determining that a pressure of the pressing operation acting on the virtual keyboard exceeds a pressure threshold.

13. The apparatus for cursor control according to any of claims 10 to 12, wherein the control module (42) is further configured to control the cursor to move in the text editing interface at a second velocity in response to not receiving a stop-moving instruction when the cursor has moved for a first preset distance in the text editing interface at a first velocity, wherein the second velocity is greater than the first velocity.

14. An electronic device (500), comprising:
a processor (520); and
a memory (504), configured to store instructions executable by the processor (520),
wherein the processor (520) is configured to perform the instructions to implement the method for cursor control of any one of claims 1 to 9.

15. A computer-readable storage medium storing thereon a computer program which, when performed by a processor, implements the steps of the method for cursor control of any one of claims 1 to 9.
